# EUROPÄISCHE PATENTSCHRIFT

(11) **EP 1 520 117 B1**
(45) Veröffentlichungstag und Bekanntmachung des Hinweises auf die Patenterteilung: **13.12.2006**
(21) Anmeldenummer: 03761428.6
(22) Anmeldetag: 25.06.2003
(51) Int. Cl.: F16D 47/06, F16H 45/02

(54) **DREHMOMENTÜBERTRAGUNGSEINRICHTUNG**
TORQUE TRANSMISSION DEVICE
DISPOSITIF DE TRANSMISSION DE MOMENT DE COUPLE

(30) Priorität: 27.06.2002 DE 10228712
(43) Veröffentlichungstag der Anmeldung: 06.04.2005
(73) Patentinhaber: LuK Lamellen und Kupplungsbau Beteiligungs KG, 77815 Bühl (DE)
(72) Erfinder: MAUCHER, Edmund, Wooster, OH 44691 (US); BREES, William, Norton, OH 44203 (US)
(86) Internationale Anmeldenummer: PCT/DE2003/002113
(87) Internationale Veröffentlichungsnummer: WO 2004/003400

(56) Entgegenhaltungen:
- CH-A- 312 037
- DE-A- 2 245 901
- DE-C- 891 502
- DE-C- 3 917 986

## Beschreibung

Die vorliegende Erfindung betrifft eine Drehmomentübertragungseinrichtung nach der Oberbegriff des Anspruchs 1.

Aus der Schrift DE 3917986 C1 ist ein Drehmomentwandler bekannt, der mit einer Überbrückungskupplung ausgestattet ist, die in Innern des Torus' angeordnet ist. Diese Kupplung ist als Fliehkraft-Kupplung ausgebildet und tritt erst dann allmählich in Funktion, wenn eine minimale Drehzahl der Pumpe - und damit des Motors - erreicht ist. Ein Nachteil dieser Lösung liegt darin, dass bei niedrigen Drehzahlen kein Kupplungsvorgang zustande kommt und dass der Kupplungsvorgang bei höheren Drehzahlen nicht drehzahlunabhängig gewählt werden,kann.

Derartige Drehmomentübertragungseinrichtungen sind insbesondere für Stufenautomatikgetriebe bekannt. Aufgabe der vorliegenden Erfindung ist es, die Dämpfungswirkung derartiger Einrichtungen zu verbessern, wobei Drehträgheit und Gewicht denen von Drehmomentübertragungseinrichtungen nach Stand der Technik entsprechen sollen und wobei die Abmaße, insbesondere die axiale Länge, gegenüber Drehmomentübertragungseinrichtungen nach Stand der Technik nicht vergrößert sein sollen.

Dieses Problem wird durch eine Drehmomentübertragungseinrichtung gelöst, bei der die Wandlerüberbrückungskupplung einen mit dem Gehäuse oder dem Pumpenrad kraftschlüssig verbundene Flansch umfasst, der zwischen dem Pumpenrad und dem Turbinenrad - radial außerhalb des Pumpenrades und des Turbinenrades - angeordnet ist und der mittels einer Kupplung reibschlüssig mit dem Turbinenrad verbindbar ist. Unter kraftschlüssiger Verbindung wird hier sowohl eine unmittelbare Verbindung als auch eine beispielsweise über weitere, insbesondere federelastische, Elemente erfolgende Verbindung verstanden. Die weiteren Elemente können dabei starr oder nachgiebig sein. Der Flansch kann vorzugsweise umlaufend ausgebildet sein, ebenso ist aber auch ein unterbrochener Flansch denkbar. Der Flansch ist in axialer Richtung zwischen Turbinenrad und Pumpenrad angeordnet. Die Möglichkeit der reibschlüssigen Verbindung zwischen Flansch und Turbinenrad bedeutet, dass in einer ersten Betriebsstellung beide im Wesentlichen drehfest bis zu einem Grenzmoment miteinander verbunden sind, in einer zweiten Stellung beide frei gegeneinander verdrehbar sind.

In einer Weiterbildung der Drehmomentübertragungseinrichtung ist vorgesehen, dass der Flansch an einem mit dem Gehäuse gekoppelten Torsionsschwingungsdämpfer angeordnet ist. Der Torsionsschwingungsdämpfer ermöglicht eine Bewegung des Flansches gegen eine Federkraft gegenüber dem Gehäuse.

In einer bevorzugten Ausführungsform der Drehmomentübertragungseinrichtung umfasst diese des Weiteren eine dritte schaltbare Kupplung, mit der das Pumpenrad von der Eingangswelle abgekoppelt werden kann, wobei das Pumpenrad bei geöffneter dritter Kupplung relativ gegen die Eingangswelle verdrehbar ist. Die dritte schaltbare Kupplung liegt vorzugsweise zwischen dem Pumpenrad und dem Gehäuse.

In einer Weiterbildung der Drehmomentübertragungseinrichtung ist vorgesehen, dass diese eine zweite schaltbare Kupplung umfasst, durch die das Pumpenrad drehfest mit dem Flansch verbindbar ist. Auf diese Weise kann das Pumpenrad gegen die Federwirkung der Dämpfungseinrichtung mit dem Gehäuse verbunden werden.

Mit Hilfe der dritten Kupplung ist es möglich, das Pumpenrad vollständig von der Eingangswelle zu trennen und so eine Art von Freilauf zu realisieren. Insbesondere im Stand ist die Übertragung eines Schleppmomentes auf das Getriebe unerwünscht, da dieses zu einer vermeidbaren thermischen Belastung der Drehmomentübertragungseinrichtung führt und gegenüber einem freien Leerlauf des Motors einen größeren Treibstoffverbrauch nach sich zieht. Mit Hilfe der zweiten und dritten Kupplung kann das Pumpenrad wahlweise drehmomentstarr mit der Eingangswelle verbunden werden oder über den Torsionsschwingungsdämpfer gegen eine Federkraft verdrehbar mit der Eingangswelle verbunden werden.

In einer Weiterbildung der Drehmomentübertragungseinrichtung ist vorgesehen, dass der Flansch wahlweise drehfest mit dem Pumpenrad und/oder dem Turbinenrad koppelbar ist. Mit Hilfe der zuvor dargestellten ersten, zweiten sowie dritten Kupplung lassen sich auf diese Weise verschiedene Betriebszustände realisieren. Wenn alle Kupplungen geöffnet sind, mithin also der Flansch weder mit dem Pumpenrad noch mit dem Turbinenrad reibschlüssig gekoppelt ist und gleichzeitig die dritte Kupplung geöffnet ist, so befindet sich die Drehmomentübertragungseinrichtung im Freilauf. Es erfolgt daher bis auf Schleppmomente zwischen Gehäuse und den weiteren Einrichtungen praktisch keine Drehmomentübertragung. Zumindest ist diese wesentlich geringer als die Übertragung im Wandlerbetrieb. Bei geschlossener dritter Kupplung erfolgt ein Wandlerbetrieb. Werden erste und zweite Kupplung geschlossen, die dritte Kupplung hingegen geöffnet, so erfolgt ein Überbrückungsbetrieb, Turbinenrad und Pumpenrad sind also drehfest miteinander verbunden, wobei der Antrieb beider über den Torsionsschwingungdämpfer erfolgt. Das Gehäuse einerseits und die Kombination Turbinenrad/Pumpenrad andererseits bilden gegeneinander gegen die Federkraft des Torsionsschwingungsdämpfers verdrehbare Systeme, wobei das Schwingungsverhalten des Gesamtsystems durch die Drehträgheiten der beiden genannten Subsysteme sowie die Dämpfungs- und Federwirkungen insbesondere des Torsionsschwingungsdämpfers bestimmt werden.

Der Torsionsschwingungsdämpfer ist vorzugsweise innerhalb des Gehäuses angeordnet.

In einer bevorzugten Ausführungsform der erfindungsgemäßen Drehmomentübertragungseinrichtung ist vorgesehen, dass das Pumpenrad und/oder das Turbinenrad axial innerhalb des Gehäuses verschiebbar sind. Die axiale Verschiebbarkeit des Turbinenrades ermöglicht die Realisierung der ersten Kupplung, die axiale Verschiebbarkeit des Pumpenrades ermöglicht die Realisierung der zweiten und dritten Kupplung.

Vorzugsweise sind die erste und/oder zweite und/oder dritte Kupplung Reibungskupplungen. Dazu umfassen die Reibungskupplungen jeweils Reibbeläge.

Vorzugsweise können die erste und/oder zweite und/oder dritte Kupplung durch axiale Verschiebung des Pumpenrades und/oder des Turbinenrades geöffnet und geschlossen werden.

Vorzugsweise ist vorgesehen, dass die axiale Verschiebung des Turbinenrades hydraulisch erfolgt. Des Weiteren kann vorgesehen sein, das die axiale Verschiebung des Pumpenrades hydraulisch erfolgt. Dazu umfasst die Drehmomentübertragungseinrichtung einen ersten Druckkanal und einen zweiten Druckkanal, mit deren Hilfe das Turbinenrad und das Pumpenrad jeweils axial mit Druck beaufschlagt werden können. Turbinenrad und Pumpenrad sind dabei so gelagert, dass ein Flüssigkeitsausstrom durch die gesamte Drehmomentübertragungseinrichtung möglich ist, d.h. mit anderen Worten, das beispielsweise der erste Druckkanal mit Druck beaufschlagt wird und dadurch eine Durchströmung der gesamten Drehmomentübertragungseinrichtung erfolgt, wobei Hydraulikflüssigkeit durch den ersten Druckkanal einströmt und durch den zweiten Druckkanal ausströmt.

Vorzugsweise ist vorgesehen, dass die erste, zweite und dritte Kupplung geöffnet sind, wenn der erste und zweite Druckkanal etwa gleichen Druck aufweisen. Dies kann bedeuten, dass der Druck in beiden Druckkanälen in etwa gleich Null ist, ebenso kann dieser aber auch auf einem anderen Niveau sein. Dadurch, dass alle Kupplungen geöffnet sind, befindet sich die Drehmomentübertragungseinrichtung im Freilauf.

Vorzugsweise ist vorgesehen, dass die dritte Kupplung geschlossen und die erste und zweite Kupplung geöffnet sind, wenn der Druck an dem ersten Druckkanal höher ist als der Druck an dem zweiten Druckkanal.

Vorzugsweise ist vorgesehen, dass die dritte Kupplung geöffnet, die erste und zweite Kupplung geschlossen sind, wenn der Druck an dem zweiten Druckkanal höher ist als der Druck an dem ersten Druckkanal. Durch die zuvor dargestellten Maßnahmen lassen sich drei Schaltzustände der Kupplungen innerhalb der Drehmomentübertragungseinrichtung realisieren. Auf diese Weise kann ein Freilauf, ein Wandlerbetrieb sowie eine Überbrückung des Wandlerbetriebes realisiert werden.

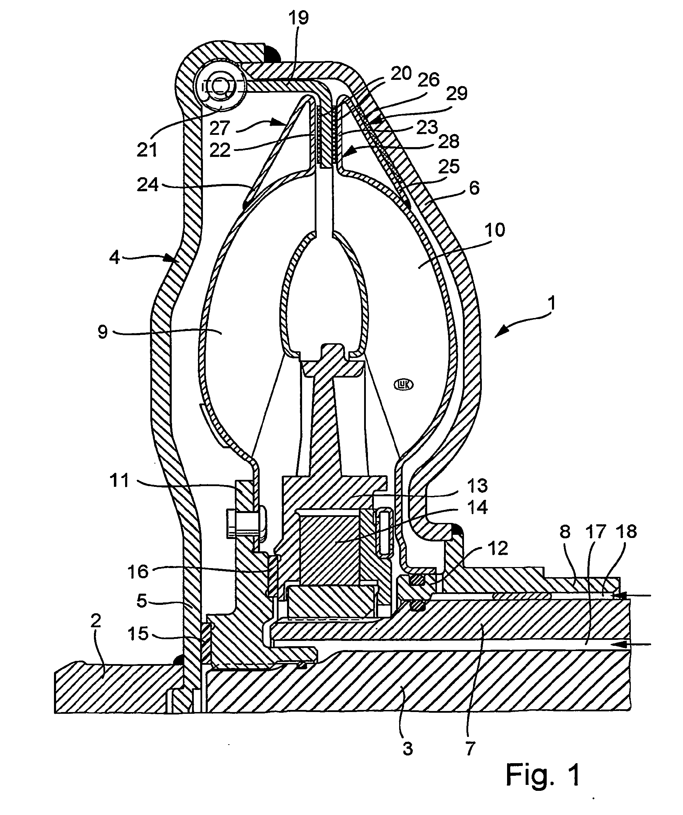

Im Folgenden wird ein Ausführungsbeispiel anhand der beiliegenden Zeichnungen beschrieben. Dabei zeigt
Figur 1 eine erfindungsgemäße Drehmomentübertragungseinrichtung im Schnitt.

Eine Drehmomentübertragungseinrichtung 1 umfasst eine Antriebswelle 2, die beispielsweise mit einer nicht dargestellten Kurbelwelle eines Verbrennungsmotors in einem Kraftfahrzeug verbunden ist sowie eine Eingangswelle 3, die mit dem ebenfalls nicht dargestellten Schaltautomaten verbunden ist. Die Drehmomentübertragungseinrichtung 1 umfasst des Weiteren ein Gehäuse 4 bestehend aus einem ersten Gehäuseteil 5 sowie einem zweiten Gehäuseteil 6. Das erste Gehäuseteil 5 sowie das erste Gehäuseteil 6 sind beispielsweise an ihrem Außenumfang dicht miteinander verschweißt. Die Drehmomentübertragungseinrichtung 1 ist drehbar auf einem Getriebestumpf 7 des nicht dargestellten Getriebes gelagert. Die Drehmomentübertragungseinrichtung 1 ist mit Hilfe einer Dichtnase 8 sowie nicht dargestellten Dichtmitteln drehbar, aber öldicht, an dem nicht dargestellten Getriebegehäuse gelagert.

Innerhalb des Gehäuses 4 ist ein Turbinenrad 9 sowie ein Pumpenrad 10 angeordnet. Das Turbinenrad 9 ist mit einem Nabenflansch 11 drehfest, aber axial verschiebbar, mit der Antriebswelle 3 verbunden. Das Pumpenrad 10 ist axial verschiebbar sowie verdrehbar an einem Lagervorsprung 12 des Gehäuses 4 angeordnet. Zwischen Pumpenrad 10 und Turbinenrad 9 ist ein an sich bekanntes Leitrad 13 mittels eines Freilaufs 14 auf dem Getriebestumpf 7 in eine Richtung drehfest und die andere Richtung verdrehbar gelagert. Das Leitrad 13 ist ebenfalls in axialer Richtung verschiebbar. Ein erster Anschlagring 15 sorgt für eine axiale Abstützung des Turbinenrades 9 gegenüber dem Gehäuse 4. Entsprechend sorgt ein zweiter Anschlagring 16 für eine axiale Abstützung des Leitrades 13 gegenüber dem Turbinenrad 9.

Die Drehmomentübertragungseinrichtung 1 verfügt über einen ersten Druckkanal 17 sowie einen zweiten Druckkanal 18. Über die Druckkanäle kann Hydrauliköl durch das System geleitet werden.

An der Innenseite des Außenumfangs des ersten Gehäuseteils 5 ist ein Torsionsschwingungsdämpfer 21 angeordnet. Dieser wird vorzugsweise aus ineinander geschachtelten Bogenfedem gebildet, wobei vorzugsweise zwei über den Umfang verteilte und sich annähernd über den halben Umfang erstreckende Bogenfedern die in Umfangsrichtung wirksame Energiespeicher bilden. Dabei werden die Bogenfedem an einem umfangsseitigen Ende vom nicht näher dargestellten Beaufschlagungseinrichtungen, die mit dem ersten Gehäuseteil 5 verbunden oder aus diesem geformt sind und am anderen Ende durch einen axial erweiterten Ansatz eines Flansches 19 beaufschlagt. Mit anderen Worten ist der Flansch 19 gegen die Kraft der Bogenfedern gegenüber dem ersten Gehäuseteil 5 verdrehbar. Der Flansch 19 ist innerhalb des Gehäuses 4 umlaufend ausgebildet und beiderseits mit Reibbelägen 20 versehen.

Das Turbinenrad 9 verfügt über eine Reibfläche 22, die eine umlaufende axiale Ringfläche bildet. Entsprechend verfügt das Pumpenrad 10 über eine zweite Reibfläche 23, wobei die erste Reibfläche 22 und die zweite Reibfläche 23 den Flansch 19 zusammen zangenartig umgreifen können. Die radial verlaufende Fläche des Flansches 19 sowie die erste Reibfläche 22 und die zweite Reibfläche 23 sind im Wesentlichen parallel zueinander ausgerichtet. Die erste Reibfläche 22 und zweite Reibfläche 23 sind im vorliegenden Ausführungsbeispiel durch eine erste Stützflanke 24 und eine zweite Stützflanke 25 an dem Turbinenrad 9 bzw. Pumpenrad 10 abgestützt, so dass beide bei einer axial aufgebrachten Last nur geringfügig in axialer Richtung verformt werden.

Die zweite Stützflanke 25 ist an der dem zweiten Gehäuseteil 6 zugewandten Seite mit einem dritten Reibbelag 26 versehen. Die erste Reibfläche 22 bildet zusammen mit dem Flansch 19 und dem zugehörigen Reibbelag 20 eine erste Kupplung 27,' entsprechend bildet die zweite Reibfläche 23 zusammen mit dem Flansch 19 und den zugehörigen Reibbelag 20 eine zweite Kupplung 28, der dritte Reibbelag 26 bildet zusammen mit dem zweiten Gehäuseteil 6 eine dritte Kupplung 29.

Im Folgenden werden die unterschiedlichen Betriebsarten der erfindungsgemäßen Drehmomentübertragungseinrichtung beschrieben. Dabei wird unterschieden zwischen einem Freilauf, einem Wandlerbetrieb sowie einem Überbrückungsbetrieb.

Die verschiedenen Betriebsmoden können durch eine Druckbeaufschlagung des ersten Druckkanals 17 und des zweiten Druckkanals 18 erfolgen. Werden erster Druckkanal 17 und zweiter Druckkanal 18 mit gleichem Druck beaufschlagt bzw. drucklos gehalten, so sind sowohl die erste als auch zweite als auch dritte Kupplung 27, 28, 29 geöffnet. Mit Hilfe des Freilaufs 14 läuft das Pumpenrad 10 daher frei, es wird somit kein Drehmoment übertragen und die Drehmomentübertragungseinrichtung befindet sich im Freilauf.

Wird der erste Druckkanal 17 mit Druck beaufschlagt, so erfolgt eine Durchströmung der gesamten Drehmomentübertragungseinrichtung, wobei der zweite Druckkanal 18 als Ablauf für das Betriebsmedium fungiert. Durch die Druckbeaufschlagung des ersten Druckkanals 17 wird das Pumpenrad 10 in der Darstellung der Figur 1 nach rechts gedrückt, die dritte Kupplung 29 wird daher geschlossen und das Pumpenrad 10 drehfest mit dem zweiten Gehäuseteil 6 und damit dem Gehäuse 4 verbunden. Die erste Kupplung 27 sowie die zweite Kupplung 28 sind geöffnet, so dass das Turbinenrad 9 gegenüber dem Pumpenrad 10 und dem Gehäuse 4 frei verdrehbar ist. Ein Antrieb des Turbinenrades 9 geschieht daher wie bei Drehmomentwandlern bzw. Föttinger-Kupplungen üblich allein durch die von der Relativbewegung des Turbinenrades 9 gegenüber dem Pumpenrad 10 hervorgerufenen Fluidströmung. In dieser Betriebsart befindet sich die Drehmomentübertragungseinrichtung im Wandlerbetrieb.

Wird der zweite Druckkanal 18 mit Druck beaufschlagt, so dass eine Durchströmung der Drehmomentübertragungseinrichtung von dem zweiten Druckkanal 18 als Zulauf und dem ersten Druckkanal 17 als Ablauf in das Betriebsmedium erfolgt, so wird das Pumpenrad 10 in der Darstellung der Figur 1 nach links gedrückt, so dass die dritte Kupplung 29 geöffnet wird und die zweite Kupplung 28 geschlossen wird. Das Pumpenrand 10 ist somit über den Flansch 19 und damit den Torsionsschwingungsdämpfer 21 mit dem Gehäuse 4 verbunden. Gleichzeitig wird das Turbinenrad 9 in der Darstellung der Figur 1 nach rechts gedrückt, dadurch wird die erste Kupplung 27 ebenfalls geschlossen. Das Turbinenrad 9 sowie das Pumpenrad 10 umgreifen den Flansch 19 somit zangenartig und sind dadurch drehfest miteinander verbunden. Der Flansch 19 ist wiederum mit dem Torsionsschwingungsdämpfer 21 mit dem Gehäuse 4 verbunden, so dass auch hier eine im Wesentlichen steife allerdings gegen Federkraft leicht verdrehbare Verbindung zwischen Pumpenrad 10 und Turbinenrad 9 sowie Gehäuse 4 entsteht. Die Funktion der Drehmomentübertragungseinrichtung als Drehmomentwandler ist in diesem Fall also überbrückt, die Drehmomentübertragungseinrichtung befindet sich im Überbrückungsbetrieb. Die erste und zweite Kupplung 27, 28 zusammen bilden hier also die Überbrückungskupplung.

Im Wandlerbetrieb bilden das Pumpenrad 10 mit den zugehörigen Lagerteilen sowie das Gehäuse 4 eine Einheit, die gegenüber dem Turbinenrad 9 mit den zugehörigen Lagerteilen und der Eingangswelle 3 verdrehbar sind. Beide Teilsysteme sind im Wesentlichen starr und nur über das Hydrauliköl miteinander gekoppelt. Das Schwingungsverhalten des Gesamtsystems wird daher durch die jeweiligen Drehträgheiten der einzelnen Systeme und die Kopplung durch das Fluid bestimmt. Im Überbrückungsbetrieb sind das Turbinenrad 9 sowie das Pumpenrad 10 mit den zugehörigen Lagerteilen und der Abtriebswelle 3 sowie der Flansch 19 im Wesentlichen starr miteinander verbunden und bilden ein gemeinsames drehträges System. Dieses System ist über den Torsionsschwingungsdämpfer 21 gegen Federkraft verdrehbar mit dem Gehäuse 4 verbunden. Es entsteht also insgesamt ein zu gedämpften Drehschwingungen befähigtes System, dessen charakteristische Schwingungseigenschaften aus dem Verhältnis der Massen der zuvor dargestellten Teilsysteme und die Starrheit der Federankopplung durch den Torsionsschwingungsdämpfer bestimmt wird.

Die Ausführungsbeispiele sind nicht als Einschränkung der Erfindung zu verstehen. Vielmehr sind im Rahmen der vorliegenden Offenbarung zahlreiche Abänderungen und Modifikationen möglich.

## Patentansprüche

1. Drehmomentübertragungseinrichtung für Kraftfahrzeuge mit einen Drehmomentwandler (1), umfassend wenigstens ein mit einer Antriebswelle (2) einer Antriebseinheit drehfest verbindbares Pumpenrad (9), wenigstens ein drehfest mit der Eingangswelle (3) eines anzutreibenden Stranges verbindbares Turbinenrad (10) sowie ein zwischen Pumpen- und Turbinenrad (9, 10) angeordnetes Leitrad (13), ein zumindest das Pumpen- und Turbinenrad (9, 10) aufnehmendes Gehäuse (4) sowie eine Wandlerüberbrückungskupplung, die das Pumpen- und Turbinenrad (9, 10) drehfest miteinander koppeln kann, **dadurch gekennzeichnet, dass** die Wandlerüberbrückungskupplung einen mit dem Gehäuse oder dem Pumpenrad kraftschlüssig verbundenen Flansch (19) umfasst, der zwischen dem Pumpenrad (9) und dem Turbinenrad (10) - radial außerhalb des Pumpenrades (9) und des Turbinenrades (10) - angeordnet ist und der mittels einer ersten Kupplung (27) reibschlüssig mit dem Turbinenrad (10) verbindbar ist.

2. Drehmomentübertragungseinrichtung nach dem vorhergehenden Anspruch, **dadurch gekennzeichnet, dass** der Flansch (19) an einem mit dem Gehäuse (4) gekoppelten Torsionsschwingungsdämpfer (21) angeordnet ist.

3. Drehmomentübertragungseinrichtung nach dem vorhergehenden Anspruch, **dadurch gekennzeichnet, dass** diese eine dritte schaltbare Kupplung (29) umfasst, mit der das Pumpenrad (9) von der Eingangswelle (3) abgekoppelt werden kann, wobei das Pumpenrad (9) bei geöffneter dritter Kupplung relativ gegen die Eingangswelle (3) verdrehbar ist.

4. Drehmomentübertragungseinrichtung nach dem vorhergehenden Anspruch, **dadurch gekennzeichnet, dass** diese eine zweite schaltbare Kupplung (28) umfasst, durch die das Pumpenrad (9) drehfest mit dem Flansch (19) verbindbar ist.

5. Drehmomentübertragungseinrichtung nach dem vorhergehenden Anspruch, **dadurch gekennzeichnet, dass** die dritte schaltbare Kupplung (28) zwischen dem Pumpenrad (10) und dem Gehäuse (4) wirkt.

6. Drehmomentübertragungseinrichtung nach einem der vorhergehenden Ansprüche, **dadurch gekennzeichnet, dass** der Flansch (19) wahlweise drehfest mit dem Pumpenrad (10) und/oder dem Turbinenrad (9) koppelbar ist.

7. Drehmomentübertragungseinrichtung nach einem der Ansprüche 2-5, **dadurch gekennzeichnet, dass** der Torsionsschwingungsdämpfer (21) innerhalb des Gehäuses (4) angeordnet ist.

8. Drehmomentübertragungseinrichtung nach einem der vorhergehenden Ansprüche, **dadurch gekennzeichnet, dass** das Pumpenrad (10) und/oder das Turbinenrad (9) axial innerhalb des Gehäuses (4) verschiebbar sind.

9. Drehmomentübertragungseinrichtung nach Anspruch 4, **dadurch gekennzeichnet, dass** die erste und/oder zweite und/oder dritte Kupplung (27, 28, 29) Reibungskupplungen sind.

10. Drehmomentübertragungseinrichtung nach den vorhergehenden Anspruch, **dadurch gekennzeichnet, dass** die Reibungskupplungen (27, 28, 29) Reibbeläge (20, 26) umfassen.

11. Drehmomentübertragungseinrichtung nach einem der Ansprüche 4, 9, 10 **dadurch gekennzeichnet, dass** die erste und/oder zweite und/oder dritte Kupplung (27, 28, 29) durch axiale Verschiebung des Pumpenrades (10) und/oder des Turbinenrades (9) geöffnet und geschlossen werden können.

12. Drehmomentübertragungseinrichtung nach den vorhergehenden Anspruch, **dadurch gekennzeichnet, dass** die axiale Verschiebung des Turbinenrades (9) hydraulisch erfolgt.

13. Drehmomentübertragungseinrichtung nach einem der Ansprüche 11, 12, **dadurch gekennzeichnet, dass** die axiale Verschiebung des Pumpenrades (10) hydraulisch erfolgt.

14. Drehmomentübertragungseinrichtung nach einem der vorhergehenden Ansprüche, **dadurch gekennzeichnet, dass** diese einen ersten Druckkanal (17) und einen zweiten Druckkanal (18) umfasst.

15. Drehmomentübertragungseinrichtung nach einem der Ansprüche 4, 9-11, **dadurch gekennzeichnet, dass** die erste, zweite und dritte Kupplung (27, 28, 29) geöffnet sind, wenn der erste und zweite Druckkanal (17, 18) etwa gleichen Druck aufweisen.

16. Drehmomentübertragungseinrichtung nach den vorhergehenden Anspruch, **dadurch gekennzeichnet, dass** die dritte Kupplung (29) geschlossen, die erste und zweite Kupplung (27, 28) geöffnet sind, wenn der Druck an dem ersten Druckkanal (17) höher ist als der Druck an dem zweiten Druckkanal (18).

17. Drehmomentübertragungseinrichtung nach Anspruch 15, **dadurch gekennzeichnet, dass** die dritte Kupplung (29) geöffnet, die erste und zweite Kupplung (27, 28) geschlossen sind, wenn der Druck an dem zweiten Druckkanal (18) höher ist als der Druck an dem ersten Druckkanal (17).

## Claims

1. A torque transfer device (1) for motor vehicles, having a torque converter comprising at least one impeller (9) that is connectable by a rotationally fixed connection to a drive shaft (2) of a drive unit, at least one turbine wheel (10) that is connectable by a rotationally fixed connection to the input shaft (3) of a power train that is to be driven, and a torque multiplier (13) positioned between impeller and turbine wheel (9, 10), a housing (4) that receives at least the impeller and turbine wheels (9, 10), and a torque converter lockup clutch which can couple the impeller and turbine wheel (9, 10) together by a rotationally fixed connection, **characterized in that** the torque converter lockup clutch includes a flange (19) which is non-positively connected to the housing or the impeller, which is positioned between the impeller (9) and the turbine wheel (10) - radially outside of the impeller (9) and the turbine wheel (10) - and which may be connected by a frictional connection to the turbine wheel (10) by means of a first clutch (27).

2. The torque transfer device according to the preceding claim, **characterized in that** the flange (19) is located on a torsion vibration damper (21) that is coupled with the housing (4).

3. The torque transfer device according to the preceding claim, **characterized in that** it includes a third engageable and disengageable clutch (29) with which the impeller (9) can be uncoupled from the input shaft (3), the impeller (9) being rotatable counter to the input shaft (3) when the third clutch is disengaged.

4. The torque transfer device according to the preceding claim, **characterized in that** it includes a second engageable and disengageable clutch (28) with which the impeller can be (9) connected to the flange (19) by a rotationally fixed connection.

5. The torque transfer device according to the preceding claim, **characterized in that** the third engageable and disengageable clutch (28) operates between the impeller (10) and the housing (4).

6. The torque transfer device according to one of the preceding claims, **characterized in that** the flange (19) may optionally be coupled with the impeller (10) and/or the turbine wheel (9) by a rotationally fixed connection.

7. The torque transfer device according to one of Claims 2 through 5, **characterized in that** the torque vibration damper (21) is located inside the housing (4).

8. The torque transfer device according to one of the preceding claims, **characterized in that** the impeller (10) and/or the turbine wheel (9) are movable axially inside the housing (4).

9. A torque transfer device according to Claim 4, **characterized in that** the first and/or second and/or third clutch (27, 28, 29) are friction clutches.

10. The torque transfer device according to the preceding claim, **characterized in that** the friction clutches (27, 28, 29) include friction linings (20, 26).

11. The torque transfer device according to one of Claims 4, 9, 10, **characterized in that** the first and/or second and/or third clutch (27, 28, 29) can be disengaged and engaged by moving the impeller (10) and/or the turbine wheel (9) axially.

12. The torque transfer device according to the preceding claim, **characterized in that** the axial movement of the turbine wheel (9) is effected hydraulically.

13. The torque transfer device according to one of Claims 11 and 12, **characterized in that** the axial movement of the impeller (10) is effected hydraulically.

14. The torque transfer device according to one of the preceding claims, **characterized in that** it includes a first pressure duct (17) and a second pressure duct (18).

15. The torque transfer device according to one of Claims 4, 9-11, **characterized in that** the first, second and third clutches (27, 28, 29) are disengaged when the first and second pressure ducts (17, 18) are at approximately the same pressure.

16. The torque transfer device according to the preceding claim, **characterized in that** the third clutch (29) is engaged, and the first and second clutches (27, 28) are disengaged, when the pressure at the first pressure duct (17) is higher than the pressure at the second pressure duct (18).

17. The torque transfer device according to Claim 15, **characterized in that** the third clutch (29) is disengaged, and the first and second clutches (27, 28) are engaged, when the pressure at the second pressure duct (18) is higher than the pressure at the first pressure duct (17).

## Revendications

1. Dispositif de transmission de couple, pour des véhicules automobiles, ayant un convertisseur de couple (1), comprenant au moins une roue de pompe (10) pouvant être reliée, fixe en rotation, à un arbre d'entraînement (2) d'une unité d'entraînement, au moins une roue de turbine (9) pouvant être reliée, fixe en rotation, à l'arbre d'entrée (3) d'une chaîne cinématique à entraîner, ainsi qu'un stator de turbine (13) disposé entre la roue (10) de la pompe et la roue (9) de la turbine, un carter (4) logeant au moins la roue (10) de la pompe et la roue (9) de la turbine, ainsi qu'un embrayage de prise directe par convertisseur qui peut coupler l'une à l'autre, solidaires en rotation, la roue (10) de la pompe et la roue (9) de la turbine,
**caractérisé en ce que** l'embrayage de prise directe par convertisseur comprend une bride (19) reliée, par adhérence, au carter ou à la roue de la pompe, bride qui, à l'extérieur de la roue (10) de la pompe et de la roue (9) de la turbine, dans le sens radial, est disposée entre la roue (10) de la pompe et la roue (9) de la turbine, et qui peut être reliée, par friction, à la roue (9) de la turbine, au moyen d'un premier embrayage (27).

2. Dispositif de transmission de couple selon la revendication précédente, **caractérisé en ce que** la bride (19) est disposée sur un amortisseur de vibrations de torsion (21) couplé au carter (4).

3. Dispositif de transmission de couple selon la revendication précédente, **caractérisé en ce que** celui-ci comprend un troisième embrayage ou accouplement embrayable (29) avec lequel la roue (10) de la pompe peut être désaccouplée de l'arbre d'entrée (3), où la roue (10) de la pompe peut, lorsque le troisième embrayage est ouvert, tourner par rapport à l'arbre d'entrée (3).

4. Dispositif de transmission de couple selon la revendication précédente, **caractérisé en ce que** celui-ci comprend un deuxième embrayage ou accouplement embrayable (28) avec lequel la roue (10) de la pompe, fixe en rotation, peut être reliée à la bride (19).

5. Dispositif de transmission de couple selon la revendication précédente, **caractérisé en ce que** le troisième embrayage ou accouplement embrayable (29) agit entre la roue (10) de la pompe et le carter (4).

6. Dispositif de transmission de couple selon l'une quelconque des revendications précédentes, **caractérisé en ce que** la bride (19), fixe en rotation, peut être couplée, au choix, à la roue (10) de la pompe et / ou à la roue (9) de la turbine.

7. Dispositif de transmission de couple selon l'une quelconque des revendications 2 à 5, **caractérisé en ce que** l'amortisseur de vibrations de torsion (21) est disposé à l'intérieur du carter (4).

8. Dispositif de transmission de couple selon l'une quelconque des revendications précédentes, **caractérisé en ce que** la roue (10) de la pompe et / ou la roue (9) de la turbine sont mobiles axialement, à l'intérieur du carter (4).

9. Dispositif de transmission de couple selon la revendication 4, **caractérisé en ce que** les premier et / ou deuxième et / ou troisième embrayages (27, 28, 29) sont des embrayages à friction.

10. Dispositif de transmission de couple selon la revendication précédente, **caractérisé en ce que** les embrayages à friction (27, 28, 29) comprennent des garnitures de friction (20, 26).

11. Dispositif de transmission de couple selon l'une quelconque des revendications 4, 9, 10, **caractérisé en ce que** les premier et / ou deuxième et / ou troisième embrayages (27, 28, 29) peuvent être ouverts et fermés par déplacement axial de la roue (10) de la pompe et / ou de la roue (9) de la turbine.

12. Dispositif de transmission de couple selon la revendication précédente, **caractérisé en ce que** le déplacement axial de la roue (9) de la turbine se produit hydrauliquement.

13. Dispositif de transmission de couple selon l'une ou l'autre des revendications 11, 12, **caractérisé en ce que** le déplacement axial de la roue (10) de la pompe se produit hydrauliquement.

14. Dispositif de transmission de couple selon l'une quelconque des revendications précédentes, **caractérisé en ce que** celui-ci comprend un premier canal de pression (17) et un deuxième canal de pression (18).

15. Dispositif de transmission de couple selon l'une quelconque des revendications 4, 9 à 11, **caractérisé en ce que** les premier, deuxième et troisième embrayages (27, 28, 29) sont ouverts lorsque les premier et deuxième canaux de pression (17, 18) présentent à peu près la même pression.

16. Dispositif de transmission de couple selon la revendication précédente, **caractérisé en ce que** le troisième embrayage (29) est fermé, les premier et deuxième embrayages (27, 28) ouverts, lorsque la pression au niveau du premier canal de pression (17) est plus élevée que la pression au niveau du deuxième canal de pression (18).

17. Dispositif de transmission de couple selon la revendication 15, **caractérisé en ce que** le troisième embrayage (29) est ouvert, les premier et deuxième embrayages (27, 28) fermés, lorsque la pression au niveau du deuxième canal de pression (18) est supérieure à la pression au niveau du premier canal de pression (17).
